# EUROPEAN PATENT SPECIFICATION

(11) **EP 3 087 844 B1**
(45) Date of publication and mention of the grant of the patent: **22.05.2019**
(21) Application number: 16165532.9
(22) Date of filing: 15.04.2016
(51) Int. Cl.: A23F 5/08, A23F 5/10, A47J 31/42

(54) **METHOD FOR PREPARING COFFEE-BASED DRINKS WITH DIFFERENT ORGANOLEPTIC CHARACTERISTICS FROM THE SAME COFFEE BLEND**
VERFAHREN ZUR HERSTELLUNG VON KAFFEEMIXGETRÄNKE VERSCHIEDENER ORGANOLEPTISCHEN EIGENSCHAFTEN BASIEREND AUF DER GLEICHEN KAFFEEMISCHUNG
PROCÉDÉ DE PRÉPARATION DE BOISSONS DE CAFÉ AVEC CARACTERISTIQUES ORGANOLEPTIQUES DIFFERENTES DE MÊME CAFÉ MÉLANGE

(30) Priority: 28.04.2015 IT MI20150604
(43) Date of publication of application: 02.11.2016
(73) Proprietor: Gruppo Cimbali S.p.A., 20082 Binasco (MI) (IT)
(72) Inventor: Galimberti, Alberto, 20082 Binasco MI (IT); Bonomi, Andrea, 20082 Binasco MI (IT)
(74) Representative: Perani & Partners S.p.A.

(56) References cited:
- EP-A1- 2 314 188
- WO-A1-95/02334
- US-A1- 2001 053 399

## Description

The present invention refers to a method for preparing coffee-based drinks with different organoleptic characteristics from one same coffee mixture and quality of coffee.

The term organoleptic characteristics of coffee-based drinks, in the present invention, means the characteristics connected with the degree of acidity, the degree of bitterness and the body of the drink, as emerge from the sensor analysis regulated by the method established by the International Institute of Coffee Tasters (*IIAC*) with Head Office in Galleria Vittorio Veneto 9 c/o Centro Studi, 25128 Brescia (Italy).

In the production and sale of coffee-based drinks, particularly when it concerns gourmet production, it is known that the barista often takes on the role of experimenter of new drinks. In particular, in trendy locations it is not rare to find baristas who make a personal coffee mixture starting from different coffee powders obtained by grinding the corresponding coffee beans in dedicated coffee grinders.

It is also known that sometimes the barista prepares a dose of powdered coffee creating a panel of coffee, in the filter-holder of the machine, with a certain thickness, which has a differentiated granule size in the direction of the thickness so that, during the dispensing of the drink, the panel of coffee, as well as consisting of a mixture with different qualities, causes a particular distribution of the water for forming the drink, with the result of generating a drink, generally an espresso coffee, equipped with a particular taste and with a particular creamy appearance in the cup.

US2001/0053399 describes a coffee filter pack comprising a plurality of coffee-bags. Each coffee bag contains a different ground coffee. EP2314188 relates to an apparatus for refilling the filter holders of an espresso coffee machine wherein the extent of grinding and the quantity of ground coffee can be metered and controlled. WO95/02334 relates to mixing coffee of different ground sizes to control particle packing characteristics.

In the present description, the term panel of coffee is meant to indicate an amount of ground coffee necessary for the formation of a dose of drink to be dispensed that can be single, double, triple or, in general, multiple.

The aim of the present invention is to have a method that, by using at least one grinding and dosing device and, contrary to what is known, a single coffee mixture, makes it possible to obtain coffee-based drinks with different organoleptic characteristics.

The aim is achieved, in accordance with the invention, with a method for preparing coffee-based drinks having different organoleptic characteristics from one same coffee mixture, comprising the formation of a panel of ground coffee with different granule size distributed according to the thickness of the panel, in a filter-holder, said panel consisting of a total amount di ground coffee corresponding to a predetermined dose of the drink to be prepared and being dispensed from at least one grinding device and coffee doser, wherein the formation of said panel is obtained through the dispensing in succession of a plurality of amounts of ground coffee each corresponding to a respective portion of the total amount of the panel and each equipped with a respective predetermined granule size.

Preferably, in accordance with the invention, the method, comprises the step of dispensing an amount di ground coffee corresponding to at least one first portion of the total amount of the panel, with a first predetermined granule size and the step of dispensing an amount of ground coffee corresponding to the remaining portion to complete the total amount of the panel, with a second predetermined granule size.

The invention will now be described better with reference to an embodiment thereof, given only for indicating and not limiting purposes, illustrated with the help of the attached drawings, in which:
- figure 1 schematically shows a cross section view of an example of a panel of ground coffee made in accordance with the invention;
- figure 2 schematically shows a perspective view of a filter-holder suitable for the formation of a panel of ground coffee in accordance with the invention;
- figure 3 shows a schematic perspective view of a dosing grinding device configured to carry out the method according to the invention;
- figure 4 shows a partial perspective view of the axial displacement mechanisms of the mobile grindstone of the grinding and dosing device to vary the grind granule size.

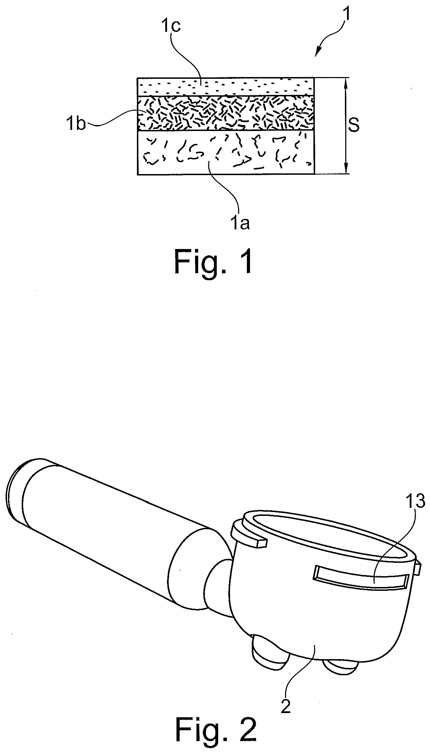

With reference to the aforementioned figures and in particular to figure 1, reference numeral 1 indicated a panel of ground coffee consisting of a predetermined total amount Q of coffee powder, necessary for producing a certain dose of coffee-based drink, for example espresso coffee.

The dose can be single, double, triple or in any case multiple.

In accordance with the invention, the panel 1 consists of a plurality of layers of ground coffee, indicated with 1a, 1b and 1c, each of which possesses its own differentiated granule size according to the thickness S of the panel itself. Moreover, each layer consists of a respective predetermined portion Qa, Qb and Qc of the total amount Q of the panel 1.

Some types of coffee-based drink displaying different organoleptic characteristics, obtained with panels of ground coffee in accordance with the method of the invention from one same coffee mixture, are illustrated in the following examples.

### EXAMPLE I

A first panel of ground coffee was prepared in a filter-holder for an espresso coffee machine by initially dispensing 10 grams of ground coffee with a standard granule size for Italian espresso coffee, i.e. with a granule size that ensures drink dispensing into a cup with a flow rate equal to 2 ml/sec.

Thereafter, the amount already dispensed is added on top with a dispensing of 4 grams of coarse ground coffee, i.e. with a granule size that allows the drink to be obtained in the cup with a flow rate equal to 3 ml/sec.

The drink obtained with the aforementioned panel, in the sensor analysis according to the IIAC method, gave the following results:

| | |
|---|---|
| - degree of acidity: | 5 |
| - degree of bitterness: | 4 |
| - body: | 7 |

### EXAMPLE II

A second panel of ground coffee was prepared in a filter-holder for an espresso coffee machine by initially dispensing 4 grams of coarse ground coffee, i.e. with a granule size that allows the drink to be obtained in the cup with a flow rate equal to 3 ml/sec.

Thereafter, the amount already dispensed is added on top with a dispensing of 10 grams of ground coffee with a standard granule size for Italian espresso coffee, i.e. with a granule size that ensures drink dispensing into a cup with a flow rate equal to 2 ml/sec.

The drink obtained with the aforementioned panel, in the sensor analysis according to the IIAC method, gave the following results:

| | |
|---|---|
| - degree of acidity: | 6 |
| - degree of bitterness: | 3,5 |
| - body: | 7,4 |

### EXAMPLE III

A third panel of ground coffee was prepared in a filter-holder for an espresso coffee machine by dispensing 14 grams of ground coffee with a standard granule size for Italian espresso coffee i.e. with a granule size that ensures drink dispensing into a cup with a flow rate equal to 2 ml/sec.

The drink obtained with the aforementioned panel, in the sensor analysis according to the IIAC method, gave the following results:

| | |
|---|---|
| - degree of acidity: | 5 |
| - degree of bitterness: | 3 |
| - body: | 8,5 |

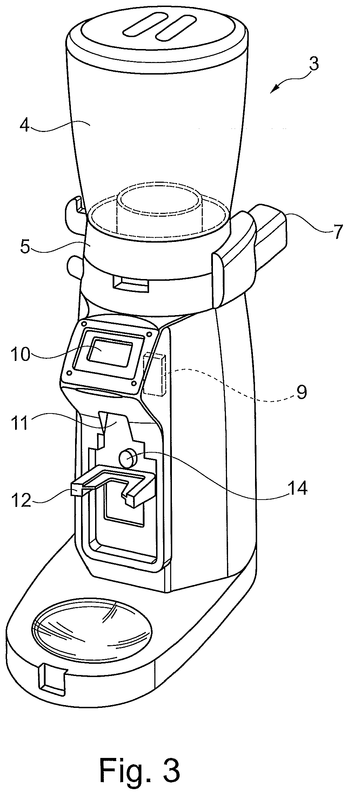

A panel 1 of ground coffee, as made in accordance with the examples given above, is formed, from one same coffee mixture in a conventional filter-holder 2 shown, as an example, in figure 2, through the dispensing of ground coffee discharged from a grinding and dosing device wholly indicated with 3 in figure 3, according to the ways that will become clear from the rest of the description.

The grinding and dosing device 3, as far as its general structure and the modes of operation are concerned, can be of the type described in EP-A 2 314 188.

It conventionally comprises a hopper 4 in which the coffee beans to be ground, dosed and dispensed into a filter-holder like the one indicated with 2 in figure 2 are placed. The grinding and dosing device 3 is equipped with a grinding mechanism comprising, in a conventional manner, a stationary grindstone and mobile grindstone, the latter being able to move axially with respect to the fixed grindstone so that, by varying the distance between the two grindstones, the grind granule size of the coffee beans is changed.

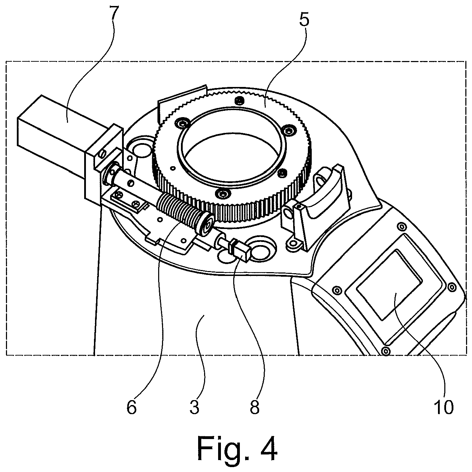

The axial displacement of the mobile grindstone is carried out in a conventional manner through a mechanism that, as illustrated in figure 4, comprises a ring nut 5 engaged with a worm screw 6 actuated by an electric actuator 7.

When the electric actuator 7 is activated, depending on the direction of rotation applied to it, the worm screw 6 rotates in one direction, for example clockwise, or in the opposite direction. Consequently, the adjusting ring nut also rotates about the axis of the motor of the grinding device, taking the mobile grindstone away from/towards the fixed one.

In a conventional manner, the worm screw 6 has a position detection device, conventionally an encoder 8, associated with it that, through the detection of the revolutions completed by the worm screw 6, is able to detect the displacement carried out by the mobile grindstone and thus generate a functional relationship between the number of revolutions of the worm screw and the grind granule size.

Through the aforementioned functional relationship, the quantitative composition of the layers 1a, 1b, 1c, and the granule size with which each layer is discharged from the grinding device through its discharge mouth, indicated with 11 in figure 3, can be programmed, in the control board 9 of the dosing grinding device, through the control panel 10, in the generation of a dose consisting of the amount Q of the panel 1.

The total dosed amount Q of ground coffee and with the foreseen distribution of the granule size, is collected in the filter-holder 2 placing the latter, in a conventional manner, on the support 12 provided in the dosing grinding device 3 under the discharge mouth 11.

In accordance with an alternative embodiment of the method according to the invention, the dispensing programme of the panel 1, stored in the control board 9 of the dosing grinding device, can be activated by a particular marking, for example a barcode or colour code, positioned on the filter-holder 2 as schematically indicated with 13 in figure 2. The marking 13 is read and decoded by a reader 14, positioned on the dosing grinding device at the support 12 for the filter-holder. The encoded information is sent by the reader 14 to the board 9 and the dispensing process of the corresponding composition of panel 1 of ground coffee is activated.

The invention as described above can undergo variants and/or modifications that, since they are totally equivalent, should be deemed to be encompassed by the scope of protection itself as claimed hereinafter. The invention is strictly defined by the claims.

In particular, although preferably the complete dispensing of the panel 1 with differentiated granule size with the same type of coffee mixture, is carried out with the programming of one same dosing grinding device, alternatively the composition of the panel 1 can take place in part in a dosing grinding device and completed in another dosing grinding device, both provided with the same type of coffee mixture, each of which is programmed to make the respective portion of the panel 1 with the relative granule size.

Alternatively, the method according to the invention can be carried out through a dosing grinding group comprising two grinding chambers and respective control and adjustment devices of the grindstones actuated with respective motors or through a single motor and suitable transmission means.

## Claims

1. Method for preparing coffee-based drinks having different organoleptic characteristics from one same coffee mixture, comprising the formation of a panel (1) of ground coffee with different granule size distributed according to the thickness (S) of the panel, in a filter-holder (2), said panel consisting of a total amount (Q) of ground coffee corresponding to a predetermined dose of the drink to be prepared and being dispensed by at least one grinding device and coffee doser (3), wherein the formation of said panel is obtained through the dispensing in succession of a plurality of amounts of ground coffee (Qa, Qb, Qc) each corresponding to a respective portion of the total amount (Q) of the panel (1) and each equipped with a respective predetermined granule size.

2. Method according to claim 1, comprising the step of dispensing an amount of ground coffee corresponding to at least one first portion of the amount of the panel with a predetermined first granule size and the step of dispensing an amount of ground coffee corresponding to the remaining portion to complete the total amount of the panel (1), with a second predetermined granule size.

3. Method according to claim 1 and 2, wherein the steps for dispensing said portions of ground coffee from one same coffee mixture with respective granule sizes are arranged on one same dosing grinding device.

4. Method according to claim 1 and 2, wherein the steps for dispensing said portions of ground coffee from one same coffee mixture with respective granule sizes are arranged on respective dosing grinding devices.

5. Method according to any one of claims 1 to 4 that also includes the provision on the filter-holder (2) of a marking (10) comprising an identifying code of the ground coffee portions with the relative granule size to be dispensed by the dosing grinding device (3), the provision, on the dosing grinding device (3), of a reader (14) of said marking (13) and of said code of the filter-holder, and the transformation of said code into corresponding operating instructions for the control board (9) of the dosing grinding device (3).

## Patentansprüche

1. Verfahren zur Herstellung von Getränken auf Kaffeebasis mit verschiedenen organoleptischen Eigenschaften aus demselben Kaffeegemisch, umfassend die Bildung einer Platte (1) aus gemahlenem Kaffee mit unterschiedlicher Korngröße, die entsprechend der Dicke (S) der Platte in einem Filterhalter (2) verteilt ist, wobei die Platte aus einer Gesamtmenge (Q) des gemahlenen Kaffees besteht, die einer vorbestimmten Dosis des zuzubereitenden Getränks entspricht und welches von mindestens einer Mahlvorrichtung und einem Kaffeedosierer (3) abgegeben wird, wobei die Bildung der Platte durch das aufeinanderfolgende Abgeben einer Vielzahl von Mengen an gemahlenem Kaffee (Qa, Qb, Qc) erhalten wird, die jeweils einer entsprechenden Portion der Gesamtmenge (Q) der Platte (1) entspricht und die jeweils eine entsprechende vorbestimmte Korngröße aufweist.

2. Verfahren nach Anspruch 1, umfassend den Schritt des Abgebens einer Menge an gemahlenem Kaffee, entsprechend mindestens einer ersten Portion der Menge der Platte mit einer vorbestimmten ersten Korngröße und den Schritt des Abgebens einer Menge an gemahlenem Kaffee mit einer zweiten vorbestimmten Korngröße, die der restlichen Portion entspricht, um die Gesamtmenge der Platte (1) zu vervollständigen.

3. Verfahren nach Anspruch 1 und 2, wobei die Schritte zum Abgeben der Portionen an gemahlenem Kaffee aus demselben Kaffeegemisch mit entsprechenden Korngrößen auf derselben Dosiermahlvorrichtung angeordnet sind.

4. Verfahren nach Anspruch 1 und 2, wobei die Schritte zum Abgeben der Portionen an gemahlenem Kaffee aus demselben Kaffeegemisch mit entsprechenden Korngrößen auf entsprechenden jeweiligen Dosiermahlvorrichtung angeordnet sind.

5. Verfahren nach einem der Ansprüche 1 bis 4, das zudem das Bereitstellen einer Markierung (10) auf dem Filterhalter (2), die einen Identifikationscode der gemahlenen Kaffeeportionen mit der relativen Korngröße umfasst, die durch die Dosiermahlvorrichtung (3) abzugeben sind, das Bereitstellen eines Auslesegeräts (14) der Markierung (13) und des Codes des Filterhalters auf der Dosiermahlvorrichtung (3) und das Umwandeln des Codes in entsprechende Betriebsanleitungen für das Bedienfeld (9) der Dosiermahlvorrichtung (3) umfasst.

## Revendications

1. Procédé pour la préparation de boissons à base de café ayant différentes caractéristiques organoleptiques à partir d'un même mélange de café, comprenant la formation d'un panneau (1) de café moulu avec des différentes tailles de granules distribuées selon l'épaisseur (S) du panneau, dans un support de filtre (2), ledit panneau étant composé d'une quantité totale (Q) de café moulu correspondant à une dose prédéterminé de la boisson devant être préparée et étant distribuée par au moins un dispositif de meulage e un doseur de café (3), dans lequel la formation dudit panneau est obtenue à travers la distribution consécutive d'une pluralité de quantités de café moulu (Qa, Qb, Qc) chacune correspondant à la portion respective de la quantité (Q) du panneau (1) e chacune pourvue d'une taille de granules prédéterminée respective.

2. Procédé selon la revendication 1, comprenant l'étape de distribution d'une quantité de café moulu correspondant à au moins une première portion de la quantité du panneau avec une première taille de granule prédéterminée e l'étape de distribution d'une quantité de café moulu correspondant à la portion restante afin de compléter la quantité totale du panneau (1), avec une deuxième taille de granule prédéterminée.

3. Procédé selon la revendication 1 et 2, dans lequel les étapes pour distribuer lesdites portions de café moulu à partir d'un même mélange de café avec les tailles de granules respectives sont disposées sur un même dispositif de meulage et dosage.

4. Procédé selon la revendication 1 et 2, dans lequel les étapes pour distribuer lesdites portions de café moulu à partir d'un même mélange de café avec les tailles de granules respectives sont disposées sur les dispositifs de meulage et dosage respectifs.

5. Procédé selon l'une quelconque des revendications 1 à 4, qui comprend en outre la fourniture sur le support de filtre (2) d'un marquage (10) comprenant un code d'identification des portions de café moulu avec la taille de granule associée devant être distribuées par le dispositif de meulage et dosage (3), la fourniture, sur le dispositif de meulage et dosage (3), d'un lecteur (14) dudit marquage (13) et dudit code du support de filtre, et la transformation dudit code en instructions de fonctionnement correspondantes pour le tableau de commande (9) du dispositif de meulage et dosage (3).
